(19) Europäisches Patentamt

European Patent Office

Office européen des brevets

(11) **EP 1 727 370 A1**

(12) **EUROPEAN PATENT APPLICATION**

(43) Date of publication:
**29.11.2006 Bulletin 2006/48**

(51) Int Cl.:
**H04N 7/26** (2006.01)

(21) Application number: **05291125.2**

(22) Date of filing: **25.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Thomson Licensing
92100 Boulogne-Billancourt (FR)**

(72) Inventors:
• **Chen, Zhi Bo
Hai Dian District
Beijing 100085 (CN)**

• **Chen, Qu Qing
Hai Dian District
Beijing 100085 (CN)**
• **Wang, Charles
Hai Dian District
Beijing 100085 (CN)**

(74) Representative: **Hartnack, Wolfgang et al
Deutsche Thomson-Brandt GmbH
European Patent Operations
Karl-Wiechert-Allee 74
30625 Hannover (DE)**

(54) **Rate-distortion based video coding mode selection foreseeing the esitmation of bit rate and distortion using a simplified transform on low activity prediction residuals**

(57) In MPEG4-AVC encoding an advanced prediction with multiple prediction modes is used to increase the prediction efficiency. Known rate/distortion optimisations control the coding mode decision by evaluating the cost of each candidate coding mode and selecting the mode that yields the minimum RDO cost. The process for determining the RDO cost requires carrying out a whole encoding process to produce the coded bits and reconstructed pixels needed, requiring high processing power. The inventive rate (R1, R2) and distortion (D1, D2) calculation can be used to determine (BTEST1; BTEST2, S3) efficiently the RDO cost in the frequency domain, in a picture content-dependent manner, using an efficient rate/distortion optimised mode decision that is based on a simplified transform (STR, SITR) to obtain the lower frequency coefficients. Thereby the entropy coding can be omitted.

**Fig.4**

**Description**

The invention relates to a method and to an apparatus for computing for a video signal encoding based on pixel blocks an estimation for the resulting encoding bit rate and the encoding distortion, for example an MPEG4-AVC video signal encoding.

Background

Known video coding standards are based on hybrid coding/decoding using intra and inter coding which includes motion estimation, transform and entropy coding in order to remove temporal, spatial and statistical redundancy and irrelevancy. The recently released video coding standard ISO/IEC 14496-10 (denoted MPEG4-AVC or H.264) achieves much better compression efficiency when compared to former standards like H.263 or MPEG2 Video, by utilising for example a more advanced prediction and entropy coding. In the prediction, multiple prediction modes are adopted to increase the prediction efficiency according to different picture content properties (larger block sizes for smooth areas and smaller block sizes for areas with more details or located at boundary of objects or in fast-moving regions of an image). Typically, as shown in G.J. Sullivan and T. Wiegand: "Rate-Distortion Optimization for Video Compression", IEEE Signal Processing Magazine, Vol.15, No.6, pp.74-90, Nov.1998, the Rate/Distortion Optimisation (RDO) uses a Lagrange multiplier to control the coding mode decision by evaluating the RDO cost of each candidate coding mode and selecting the mode that yields the minimum RDO cost. The process for determining the RDO cost requires carrying out a whole encoding process to produce the coded bits and reconstructed pixels needed for computing RDO cost. Therefore the computation of the rate/distortion-optimised coding mode decision requires high processing power.
Many fast mode decision algorithms are based on a texture analysis in the spatial domain:

[1] S. Wu, K.P. Lim, et al.: "Fast INTER Mode Selection", JVT-J023.doc, JVT, Hawaii, US, 8-12th December 2003;
[2] J. Lee and B. Jeon: "Pruned Mode Decision based on Variable Block Sizes", MIPS, 2003;
[3] P. Yiny, H.Y. Cheong Tourapis, A.M. Tourapisy and J. Boyce: "FAST MODE DECISION AND MOTION ESTIMATION FOR JVT/H.264", ICIP, 2003.

Invention

There exists a need to perform a computational-efficient RDO based mode decision for e.g. H.264/AVC video coding.
A problem to be solved by the invention is to decrease the computational load for the rate/distortion optimisation calculation and the related coding processing, especially in the case of low-bitrate encoding. This problem is solved by the method disclosed in claim 1. An apparatus that utilises this method is disclosed in claim 2.
The inventive processing determines efficiently the RDO cost in the frequency domain, in a picture content-dependent manner, which leads to an efficient, rate/distortion optimised mode decision.
Advantageously, this processing can also be combined with other optimised algorithms in the spatial domain.
Based on the fact that the higher magnitudes of quantised coefficients mainly focus on the lower frequency domain, and only few of them are non-zero especially in low-bitrate coding, computational savings can be achieved by using a simplified transform to obtain the lower frequency coefficients, and to estimate rate and distortion in the frequency domain.
By performing rate/distortion optimisation in the frequency domain, the following advantages can be achieved:

- decreasing the complexity of the RDO-based encoder;
- decreasing the amount of calculations on transform, quantisation, inverse quantisation;
- omitting the entropy coding;
- decreasing the amount of calculations on inverse transform in case of using simplified transform;
- omitting inverse transform in other cases.

In principle, the inventive method is suited for computing for a video signal encoding based on pixel blocks an estimation for the resulting encoding bit rate and the encoding distortion, said method being including the steps:

- computing a value representing the magnitude of a residual block signal, e.g. the sum of absolute difference values of the residual block signal, between a current input block and a corresponding reference block and comparing said value with a pre-deter-mined threshold value;
- if said magnitude value is smaller than said threshold value, performing the following steps:

- carrying out on the current residual block a simplified transform and quantisation resulting in non-zero-magnitude quantised coefficients located on few lower frequency positions only, and a simplified inverse quantisation and transform;
- computing from the output of said simplified transform and quantisation an estimated bit rate value, and computing from the difference between the output of said simplified inverse quantisation and transform and the input of said simplified transform an estimated distortion value;
- if said magnitude value is not smaller than said threshold value, performing the following steps:

  - carrying out on the current residual block a transform and a quantisation and an inverse quantisation;
  - computing from the output of said quantisation an estimated bit rate value, and computing from the difference between the output of said inverse quantisation and the input of said quantisation an estimated distortion value.

In principle the inventive apparatus is suited for computing for a video signal encoding based on pixel blocks an estimation for the resulting encoding bit rate and the encoding distortion, said apparatus including:

- means being adapted for computing a value representing the magnitude of a residual block signal, e.g. the sum of absolute difference values of the residual block signal, between a current input block and a corresponding reference block and for comparing said value with a pre-deter-mined threshold value;
- means being adapted for:

  if said magnitude value is smaller than said threshold value, computing on the current residual block a simplified transform and quantisation resulting in non-zero-magnitude quantised coefficients located on few lower frequency positions only, and computing a simplified inverse quantisation and transform,
  and computing from the output of said simplified transform and quantisation an estimated bit rate value, and computing from the difference between the output of said simplified inverse quantisation and transform and the input of said simplified transform an estimated distortion value;

- means being adapted for:

  if said magnitude value is not smaller than said threshold value, computing on the current residual block a transform and a quantisation and an inverse quantisation,
  and computing from the output of said quantisation an estimated bit rate value, and computing from the difference between the output of said inverse quantisation and the input of said quantisation an estimated distortion value.

Advantageous additional embodiments of the invention are disclosed in the respective dependent claims.

Drawings

Exemplary embodiments of the invention are described with reference to the accompanying drawings, which show in:

Fig. 1    known circuitry for computing the cost for a coding mode;
Fig. 2    probability of three-coefficients blocks being present, for different video sequences and bit rates;
Fig. 3    a pattern of input samples for a simplified transform;
Fig. 4    inventive circuitry for computing the cost for a coding mode.

Exemplary embodiments

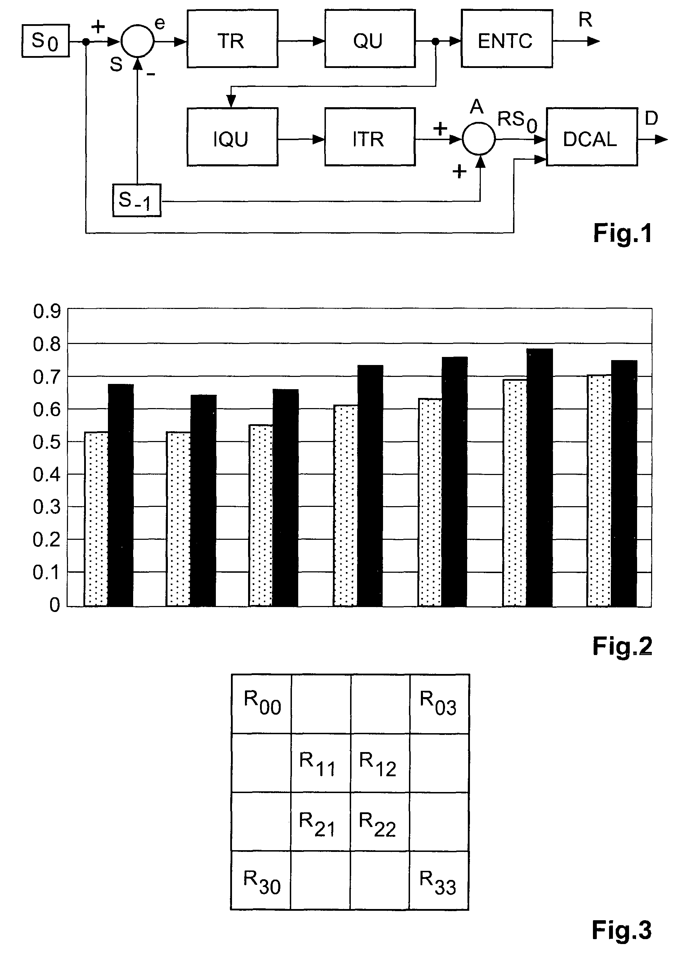

According to the prior art, in Fig. 1 the difference e between an input block partition $S_0$ and its reference $S_{-1}$ is formed in a subtractor S, and passes through a transformer TR, a quantiser QU, and an entropy coder ENTC that may also compute the resulting bit rate R. The quantised transform coefficients pass through an inverse quantiser IQU and an inverse transformer ITR to the first input of an adder or combiner A. The reference block partition $S_{-1}$ is fed to the second input of adder or combiner A which forms the reconstructed block partition $RS_0$. The distortion $D$ between the reconstructed and the input block partition is then computed in a distortion calculator DCAL. In the end, the RDO cost is computed (not depicted) using bit rate R and distortion D. The optimum coding mode then corresponds to the mode with the minimum cost $J$ of $J = D + \lambda*R$.

Some fast mode decision algorithms have been proposed (cf. [1][2][3] above) that are based on the idea that the total computational power for determining the mode selection can be reduced significantly if the cost calculations for less probable modes can be skipped. Such mode decision algorithms are based on an analysis in the spatial or time domain.

The invention, however, is based on an analysis in the frequency domain.

Fig. 2 shows separately the probability of 3-coefficients blocks, i.e. blocks in which all non-zero-magnitude quantised coefficients are located in the upper left edge of the block at the low-frequency positions $F(0,0)$, $F(0,1)$ and $F(1,0)$, for bit rates of 500kb/s and 300kb/s (dark grey or shaded) and for seven different frequently-used CIF format test video sequences. These probabilities lie in a range from about 0.52 (52%) to 0.78 (78%). This experiment shows that non-zero-magnitude quantised coefficients mainly focus on the lower frequency positions and that, in particular in the low-bitrate case, only few of them are non-zero entries. Based on this result, a simplified integer transform is proposed to replace the full transform to decrease the computation load of transform.

The two-dimensional discrete cosine transform (DCT) of a discrete function $f(x,y)$, $x,y = 0,1,...,N-1$ is defined by:

$$F(u,v) = (\frac{2}{N})k_u k_v \sum\sum f(x,y)\cos(\frac{(2x+1)u\pi}{2N}) \times \cos(\frac{2y+1)v\pi}{2N}) \tag{1}$$

wherein $N$ is the block size, u and v = 0,1,...,$N$-1, $k_u$, $k_v$ = $1/\sqrt{2}$ for u,v = 0, $k_u$,$k_v$ = 1 for u,v = 1,2,...,$N$-1. It follows from equation (1) that the DC coefficient $F(0,0)$ represents the mean of the values in the block, and that the two lowest AC coefficients $F(0,1)$ and $F(1,0)$ represent the difference between the left and right parts of the block, and between the upper and lower parts of the block, respectively.

As shown above, there is a good chance that the non-zero-amplitude quantised coefficients in a block occur only at the lowest positions (0,0), (0,1) and (1,0). Then, cross-line samples can be chosen as transform input, and a 16-component 2D-DCT can be reduced to an 8-component transform. Fig. 3 shows a corresponding pattern of input samples $R_{0,0}$, $R_{0,0}$, $R_{0,3}$, $R_{3,0}$, $R_{3,3}$, $R_{1,1}$, R$_{1,2}$, $R_{1,1}$ and R$_{2,2}$ for such transform.

Let $LU = R_{00} + R_{11}$, $LD = R_{21} + R_{30}$, $RU = R_{12} + R_{03}$, $RD = R_{22} + R_{33}$, then the three transform coefficients can be calculated by:

$$F(0,0) = k_{dc}(LU + LD + RU + RD)$$
$$F(0,1) = k_{ac}((LU - RD) + (LD - RU)) \tag{2}$$
$$F(1,0) = k_{ac}((LU - RD) - (LD - RU))$$

wherein $k_{dc}$ and $k_{ac}$ are scaling factors for calibration and by which calculation the results should match, for an important block pattern, that of a 4*4 DCT or the non-DCT integer transform used in H.264/AVC. The inventive 3-coefficient transform needs 13 additions and 3 multiplications only, while the (already simplified) AVC/H.264 integer 4*4 transform requires 64 additions and 16 shift operations.

The quantisation of the block requires another 16 multiplications in AVC/H.264. Advantageously, the multiplication in the 3-coefficient transform can also be combined with the quantisation and hence only 3 multiplications are needed.

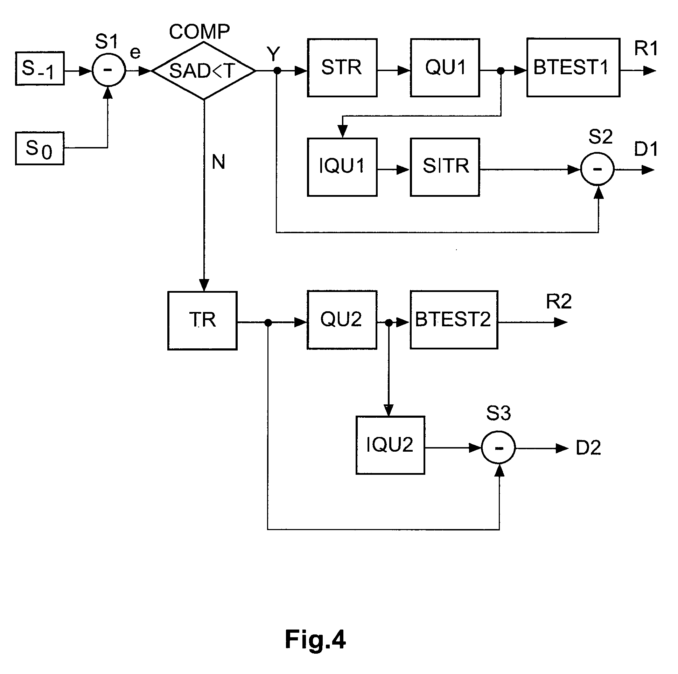

The inventive processing steps of computing the RDO cost for a coding mode of a block partition are described in the following. Fig. 4 shows the corresponding block diagram.

After that, an analysis on how to get the threshold, bits estimation (estimation of bits for header information and transform coefficients) and distortion estimation will be described.

Step 1:

Calculate the sum of absolute difference values SAD of the residual block signal, or any other value representing the magnitude of the residual signal, and compare it with a threshold value T.

If SAD < T, choose 'simplified transform' to get lower frequency coefficients and to set the other transform coefficients to zero.

If SAD ≥ T, choose original transform (e.g. 4*4 integer transform in AVC/H.264) to get the transform coefficients. In Fig. 4 the difference e between an input block partition $S_0$ and its reference $S_{-1}$ is formed in a subtractor S1, and is fed to a comparator COMP to perform this comparison. T can be fed to a second input of the comparator, or it is stored in the comparator.

Step 2:

In case of SAD < T, carry out a simplified transform and quantisation of the transformed coefficients, whereby only some low frequency coefficients need to be quantised.
In Fig. 4 this is carried out by a simplified transformer STR and a quantiser QU1, or by a simplified transformer STR which in addition carries out this quantisation.
In case of SAD ≥ T, an original transform and a quantisation of the transformed coefficients is carried out.
In Fig. 4 this is carried out by an original transformer TR and a second quantiser QU2.

Step 3:

In case of SAD < T, performing bits estimation in the frequency domain in order to reduce the computational load of the entropy coding. A look-up table can be used to estimate bits for macroblock header information directly and then to estimate bits for transformed coefficients in the 4*4 blocks, based on a simple formula that is related to the values total_coeff, total_zeros and abs_level only (see below for detail), in order to get an estimated bit rate value R1.
In Fig. 4 the output of quantiser QU1 is fed to a corresponding bit rate estimator BTEST1, and to an inverse quantiser IQU1.
In case of SAD ≥ T, performing bits estimation in the frequency domain, in order to get an estimated bit rate value R2.
In Fig. 4 the output of quantiser QU2 is fed to a corresponding second bit rate estimator BTEST2, and to a second inverse quantiser IQU2.

Step 4:

If the simplified transform was used, then an inverse quantisation and a simplified inverse transform (because many coefficients are zero after quantisation) is used to reconstruct the spatial domain block and to perform a distortion estimation in the spatial domain, in order to get an estimated distortion value D1.
In Fig. 4 the output of inverse quantiser IQU1 is fed to a simplified inverse transformer SITR and to a second subtractor S2 that forms from the SITR output and the input of simplified transformer STR the distortion value D1.
If the original transform was used, the distortion estimation can be performed in the frequency domain in order to omit the computational load resulting from inverse transform and reconstruction of the block partition. Based on Paseval's theorem (i.e. in signal processing, energy in the spatial domain should be the same as that in the frequency domain), an SSD value (sum-of-squared-differences) in the spatial domain can be estimated in the frequency domain. This is performed here by inverse quantising the output of the quantiser and by subtracting the corresponding result form the input of the quantiser (see below for detail).
In Fig. 4 the output of inverse quantiser IQU2 is fed to a third subtractor S3 that forms from the IQU2 output and the output of transformer TR the distortion value D2.

Step 5:

Computing for the video signal encoding the RDO cost based on the estimated rate and distortion value pairs R1,D1 and R2,D2, respectively. In case of using the simplified transform, the RDO cost $J$ is calculated by $J_1 = D_1 + \lambda R_1$, and in the other case $J_2 = D_2 + \lambda R_2$, wherein $\lambda$ is a constant.

*Determination of the threshold T:*

As stated in I-Ming Pao, Ming-Ting Sun: "Modelling DCT coefficients for fast video encoding", IEEE Transactions on Circuits and Systems for Video Technology, vol.9, issue 4, pp.608-616, June 1999, the residual pixel values at the input of the transform can be approximated by a Laplacian distribution with zero mean and a separable covariance $r(m, n) = \sigma_f^2 \rho^{|m|} \rho^{|n|}$, wherein m and n are respectively the horizontal and vertical distances between two pixels, $\sigma_f^2$ is the variance of the residual pixel values, and $\rho(|\rho|<1)$ is the correlation coefficient. Then the transform can be described as $F = AfA^T$, where $A$ is the transformation matrix, $f$ is the residual pixel matrix as well as the input of the transform. According to A.K. Jain: "Fundamentals of Digital Image Processing", Englewood Cliffs, NJ, Prentice-Hall, 1989, then the variance of (u,v)th transform coefficient $\sigma_F^2[u,v]$ can be written as:

$$\sigma_F{}^2[u,v] = \sigma_f{}^2[ARA^T]_{u,u}[ARA^T]_{v,v}, \text{ wherein } R = \begin{bmatrix} 1 & \rho & \rho^2 & \rho^3 \\ \rho & 1 & \rho & \rho^2 \\ \rho^2 & \rho & 1 & \rho \\ \rho^3 & \rho^2 & \rho & 1 \end{bmatrix} \qquad (3)$$

Without much influence on the end results, ρ=0.6 is chosen (this value is taken from the above experiment). Then the relation between variance in spatial domain and in frequency domain can be deduced:

$$\sigma_F{}^2[u,v] = \sigma_f{}^2 * M[u,v], u = 0 \sim N-1; v = 0 \sim N-1 \qquad (4)$$

The integer transform in H.264/AVC is based on a 4*4 DCT transform (although one part of this integer DCT is moved to the quantisation process apparently). Without loss of accuracy, the M matrix can be deduced based on the floating-point 4*4 DCT (absolute values only are given):

$$M = \begin{bmatrix} 5.607424 & 2.125210 & 1.060864 & 0.678503 \\ 2.125210 & 0.805453 & 0.402067 & 0.257152 \\ 1.060864 & 0.402067 & 0.200704 & 0.128365 \\ 0.678503 & 0.257152 & 0.128365 & 0.082099 \end{bmatrix} \qquad (5)$$

Assuming that the quantisation step is $Q_{step}$, then in case

$$\sigma_F[0,2] < Q_{step} \qquad (6)$$

most of the non-zero-magnitude quantised coefficients will focus on the above-mentioned three lowest-position coefficients.

Based on the assumption that the residual signal has a Laplacian distribution with zero mean (cf. A.K. Jain: "Fundamentals of Digital Image Processing", Englewood Cliffs, NJ, Prentice-Hall, 1989), the variance $\sigma_f$ in the spatial domain can be approximated like:

$$\sigma_f = \sqrt{2} * MMAE = \sqrt{2} * (SAD / B_{size}) \qquad (7)$$

wherein *MMAE* is the minimum mean absolute error and $B_{size}$ is the block size used in the video coding.

From equations (4), (5) and (6) one can get:

$$SAD < \frac{B_{size}}{\sqrt{2 \times M[0,2]}} \times Q_{step} \qquad (8)$$

If the inequality (8) is satisfied, it is very likely that all non-zero-magnitude quantised coefficients are focused on the three lowest-position coefficients.

From equation (5) one can get *M*[0,2] = *M*[2,0] = 1.060864,

i.e. that 4*4 DCT transform matrix magnitude value which has the greatest magnitude except those at positions (0,0), (0,1) and (1,0), or in other words, the third largest magnitude value in the 4*4 DCT transform matrix. Therefore the threshold T is chosen as:

$$T \approx \frac{B_{size}}{\sqrt{2 \times M[0,2]}} \times Q_{step} \qquad\qquad (9)$$

*Bits estimation:*

In H.264/AVC, CAVLC (context-adaptive variable length coding) or CABAC (context-adaptive binary arithmetic coding) is used to code the quantised transform coefficients, and zero-order Golomb code is used to code other syntax elements. Zero-order Golomb code is simple and regular so that the number of coded bits can be determined by the value of syntax elements directly. Therefore a look-up table Ue_len[i] can be established for the bits estimation of the header information:

```
for (i=0) Ue_len[i] = 1
for (1≤i≤2) Ue_len[i] = 3
for (3≤i≤6) Ue_len[i] = 5
for (7≤i≤14) Ue_len[i] = 7
for (15≤i≤30) Ue_len[i] = 9
for (31≤i≤62) Ue_len[i] = 11
for (63≤i≤126) Ue_len[i] = 13
for (127≤i≤254) Ue_len[i] = 15
for (i>254) Ue_len[i] = 17,
```

wherein i is the original number of bits for a syntax element and Ue_len[i] is the estimated code length for the encoded syntax element.

Below is the bits estimation method for each header syntax elements:

| Syntax element | Estimated bits |
| --- | --- |
| mb_type | Ue_len[mb_type2value] |
| sub_mb_type | Ue_len[sub_mb_type2value] |
| mb_run | Ue_len[mb_run] |
| Cbp | Ue_len[cbp2value] |
| intra_chroma_pred_mode | Ue_len[intra_chroma_pred_mode] |
| Mvd | Ue_len[mvd<=0 ? (-2*mvd):(2*mvd-1)] |
| qp_delta | Ue_len[qp_delta<=0 ? (-2*qp_delta): (2*qp_delta - 1)] |
| intra4x4_pred_mode | prev_intra4x4_pred_mode==1 ? 1:4 |
| ref_idx | num_ref==1 ? 0:num_ref==2 ? 1:Ue_len(ref_idx) |

Here mb_type2value, sub_mb_type2value, cbp2value means the code number of mb_type, sub_mb_type and cbp, and these code numbers can be derived from the H.264/AVC specification.

For the quantised transform coefficients, the required bits are estimated using the following formula, as was proposed by Quqing Chen, Yun He: "A Fast Bits Estimation Method for Rate-Distortion Optimisation in H.264/AVC", PCS, 2004: Total bits = 3*total_coeff + total_zeros + Σ(abs_level) (10) wherein total_coeff means the total number of non-zero transform coefficients, total_zeros means the total number of zeros before the last non-zero transform coefficients in the zig-zag scan, and Σ(abs_level) means the sum of absolute value of the transform coefficients. Note that in the above syntax element list 'Mvd' refers to the motion vector difference.

Thus, advantageously the total number of coded-bits for a 4*4 block can be estimated by a simple scan of the transform coefficients. It is not necessary to carry out an entropy coding process.

*Distortion estimation:*

In case of 3-coefficients transform, the distortion is calculated after the inverse 3-coefficients transform SITR.

On this condition, the inverse transform is much simpler than a full or original inverse transform.

In case of original DCT transform, the distortion can be estimated in the frequency domain due to Paseval's theorem, so that the computation of the inverse original DCT transform and the block reconstruction can be omitted. However, the 4*4 integer transform used in H.264/AVC is different from a DCT transform, which combines the multiplication into the quantisation.

According to the invention, some modifications are made in the inverse quantisation to simplify the distortion estimation. At first, the integer transformed coefficients are multiplied by the matrix E of scaling factors:

$$E = \begin{bmatrix} a^2 & ab/2 & a^2 & ab/2 \\ ab/2 & b^2/4 & ab/2 & b^2/4 \\ a^2 & ab/2 & a^2 & ab/4 \\ ab/2 & b^2/4 & ab/2 & b^2/4 \end{bmatrix} \tag{11}$$

wherein $a = 1/2$, $b = \sqrt{2/5}$. The multiplication result is taken as the reference signal.

Then the quantised coefficients are inversely quantised in IQU2 in the following way:

$$iLevel = round((level << q\_bits) * E[i][j] / quant\_coef[qp\_rem][i][j]) \tag{12}$$

wherein *level* is the quantised coefficients, $qbits = 15 + QP/6$, and $q_{rem} = QP$ modulus 6, and $QP$ is the input quantisation parameter. The quantisation parameter QP is an index or a parameter that codes or represents the quantiser step size. QP may have one of 52 levels between 0 and 51, as is true for MPEG4-AVC.

This result is taken as the reconstructed signal in the frequency domain.

Then in S3 the SSD value (sum-of-squared-differences) between the reference signal and the reconstructed signal is calculated and set as the estimated distortion D2. This calculation is conducted in the frequency domain and the inverse transform can be omitted.

In the practical application, the distortion estimation can be further simplified by changing the floating point data into integers and by changing the division into multiplication and shifts.

The invention can be used e.g. for video encoding optimisation with rate-distortion estimation, scalable video coding (base layer video coding), and video transmission.

**Claims**

1.  Method of computing for a video signal encoding based on pixel blocks an estimation for the resulting encoding bit rate and the encoding distortion, said method being **characterised by** the steps:

    - computing (COMP) a value (SAD) representing the magnitude of a residual block signal, e.g. the sum of absolute difference values of the residual block signal, between a current input block ($S_0$) and a corresponding reference block ($S_{-1}$) and comparing said value with a pre-determined threshold value (T);
    - if said magnitude value (SAD) is smaller than said threshold value (T), performing the following steps:

        - carrying out on the current residual block a simplified transform (STR) and quantisation (QU1) resulting in non-zero-magnitude quantised coefficients located on few lower frequency positions only, and a simplified inverse quantisation (IQU1) and transform (ISTR);
        - computing (BTEST1) from the output of said simplified transform and quantisation an estimated bit rate value (R1), and computing (S2) from the difference between the output of said simplified inverse quantisation and transform (ISTR) and the input of said simplified transform (STR) an estimated distortion value (D1);
        - if said magnitude value (SAD) is not smaller than said threshold value (T), performing the following steps:

        - carrying out on the current residual block a transform (TR) and a quantisation (QU2) and an inverse quantisation (IQU2);
        - computing (BTEST2) from the output of said quantisation (QU2) an estimated bit rate value (R2), and computing (S3) from the difference between the output of said inverse quantisation (IQU2) and the input of said quantisation (QU2) an estimated distortion value (D2).

2. Apparatus for computing for a video signal encoding based on pixel blocks an estimation for the resulting encoding bit rate and the encoding distortion, said apparatus including:

- means being adapted for computing (COMP) a value (SAD) representing the magnitude of a residual block signal, e.g. the sum of absolute difference values of the residual block signal, between a current input block ($S_0$) and a corresponding reference block ($S_{-1}$) and for comparing said value with a pre-deter-mined threshold value (T);
- means being adapted for:

if said magnitude value (SAD) is smaller than said threshold value (T), computing on the current residual block a simplified transform (STR) and quantisation (QU1) resulting in non-zero-magnitude quantised coefficients located on few lower frequency positions only, and computing a simplified inverse quantisation (IQU1) and transform (ISTR),
and computing (BTEST1) from the output of said simplified transform and quantisation an estimated bit rate value (R1), and computing (S2) from the difference between the output of said simplified inverse quantisation and transform (ISTR) and the input of said simplified transform (STR) an estimated distortion value (D1);

- means being adapted for:

if said magnitude value (SAD) is not smaller than said threshold value (T), computing on the current residual block a transform (TR) and a quantisation (QU2) and an inverse quantisation (IQU2),
and computing (BTEST2) from the output of said quantisation (QU2) an estimated bit rate value (R2), and computing (S3) from the difference between the output of said inverse quantisation (IQU2) and the input of said quantisation (QU2) an estimated distortion value (D2).

3. Method according to claim 1, or apparatus according to claim 2, wherein said simplified transform and quantisation (STR, QU1) and/or said simplified inverse quantisation and transform (IQU1, ISTR) has in the frequency domain at all block positions, except positions (0,0), (0,1) and (1,0), zero coefficient amplitudes only, the value at position (0,0) representing a DC value.

4. Method according to claim 1 or 3, or apparatus according to claim 2 or 3, wherein said threshold value (T) is:

$$T = B_{size} * Q_{step} / \sqrt{2 * M_{thlv}}$$

wherein $B_{size}$ is the size of said blocks, $Q_{step}$ is the step size used in the quantisation and $M_{thlv}$ is the third largest magnitude value in a 4*4 DCT transform matrix.

5. Method or apparatus according to claim 4, wherein $M_{thlv}$ has a value of 1.060864.

6. Method according to one of claims 1 and 3 to 5, or apparatus according to one of claims 2 to 5, wherein in said computing (BTEST1, BTEST2) of the estimated bit rate value (R1, R2) a look-up table is used to calculate the bits required for the macroblock header information, said look-up table having entries for the corresponding header information syntax elements in the code for said a video signal.

7. Method according to one of claims 1 and 3 to 6, or apparatus according to one of claims 2 to 6, wherein in said computing (BTEST1, BTEST2) of the estimated bit rate value (R1, R2) the required bits for the quantised transform coefficients of each block in a macroblock are estimated using the formula

```
Total bits = 3*total_coeff + total_zeros + ∑(abs_level) ,
```

wherein total_coeff is the total number of non-zero transform coefficients, total_zeros is the total number of zeros before the last non-zero transform coefficients in the zig-zag scan, and $\Sigma$(abs_level) is the sum of absolute value of the transform coefficients.

8. Method according to one of claims 1 and 3 to 7, or apparatus according to one of claims 2 to 7, wherein for said video signal encoding rate/distortion optimisation cost are computed based on said estimated bit rate and distortion values (R1, D1; R2, D2).

9. A bit stream that is encoded using the method of one of claims 1 and 3 to 8.

10. A storage medium that carries a bit stream that is encoded using the method of one of claims 1 and 3 to 8.

Fig.1

Fig.2

Fig.3

**Fig.4**

**European Patent
Office**

**EUROPEAN SEARCH REPORT**

Application Number

EP 05 29 1125

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | XIN JUN ; VETRO ANTHONY ; SUN HUIFANG: "Efficient macroblock coding-mode decision for H.264/AVC video coding" PROCEEDINGS OF THE PICTURE CODING SYMPOSIUM (PCS) 2004, 15 December 2004 (2004-12-15), pages 53-58, XP002348991 San Francisco, CA, United States | 9,10 | H04N7/26 |
| Y | * abstract * Section III | 1-8 | |
| Y | I-MING PAO ET AL: "Computation reduction for discrete cosine transform" CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, vol. 4, 31 May 1998 (1998-05-31), pages 285-288, XP010289528 ISBN: 0-7803-4455-3 * the whole document * | 1-8 | |
| A | EP 0 661 886 A (HEWLETT-PACKARD COMPANY) 5 July 1995 (1995-07-05) * abstract * * page 6, line 38 - line 40 * | 3 | TECHNICAL FIELDS SEARCHED (Int.Cl.7)<br><br>H04N<br>G06F |
| D,Y | CHEN QUIQING; HE YUN: "A fast bits estimation method for rate-distortion optimization in H.264/AVC" PROCEEDINGS OF THE PICTURE CODING SYMPOSIUM (PCS) 2004, 15 December 2004 (2004-12-15), pages 133-137, XP002348992 San Francisco, CA, United States | 7 | |
| X | Section 3 * abstract * | 9,10 | |

-/--

The present search report has been drawn up for all claims

| Place of search | Date of completion of the search | Examiner |
|---|---|---|
| The Hague | 26 October 2005 | Colesanti, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

**EUROPEAN SEARCH REPORT**

Application Number

EP 05 29 1125

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WIEGAND T: "JOINT MODEL NUMBER 1, REVISION 1(JM-IRL)" ITU STUDY GROUP 16 - VIDEO CODING EXPERTS GROUP, 3 December 2001 (2001-12-03), pages 1,3-75, XP001086627 | 1-8 | |
| X | Appendix I, pages 50-57 Section 3, pages 10-23 | 9,10 | |
| | ----- | | |
| | | | TECHNICAL FIELDS SEARCHED (Int.Cl.7) |

The present search report has been drawn up for all claims

| Place of search | Date of completion of the search | Examiner |
|---|---|---|
| The Hague | 26 October 2005 | Colesanti, C |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

........................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 05 29 1125

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2005

| Patent document cited in search report | | Publication date | Patent family member(s) | | Publication date |
|---|---|---|---|---|---|
| EP 0661886 | A | 05-07-1995 | JP | 7236143 A | 05-09-1995 |
| | | | US | 5467131 A | 14-11-1995 |

EPO FORM P0459

For more details about this annex : see Official Journal of the European Patent Office, No. 12/82

**EP 1 727 370 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **G.J. SULLIVAN ; T. WIEGAND.** Rate-Distortion Optimization for Video Compression. *IEEE Signal Processing Magazine,* November 1998, vol. 15 (6), 74-90
- **S. WU ; K.P. LIM et al.** Fast INTER Mode Selection. *JVT-J023.doc, JVT,* 08 December 2003
- **J. LEE ; B. JEON.** Pruned Mode Decision based on Variable Block Sizes. *MIPS,* 2003
- **P. YINY ; H.Y. CHEONG TOURAPIS ; A.M. TOURAPISY ; J. BOYCE.** FAST MODE DECISION AND MOTION ESTIMATION FOR JVT/H.264. *ICIP,* 2003
- **I-MING PAO ; MING-TING SUN.** Modelling DCT coefficients for fast video encoding. *IEEE Transactions on Circuits and Systems for Video Technology,* June 1999, vol. 9 (4), 608-616
- **A.K. JAIN.** Fundamentals of Digital Image Processing. Prentice-Hall, 1989
- **QUQING CHEN ; YUN HE.** A Fast Bits Estimation Method for Rate-Distortion Optimisation in H.264/AVC. *PCS,* 2004